# EUROPEAN PATENT SPECIFICATION

(11) **EP 3 422 362 B1**
(45) Date of publication and mention of the grant of the patent: **11.05.2022**
(21) Application number: 16891319.2
(22) Date of filing: 22.02.2016
(51) Int. Cl.: B08B 1/04, B08B 9/00, F22B 37/00, G21F 9/00

(54) **DEVICE FOR CLEANING THE ACCOMMODATING MEANS OF THE BOLTS OF THE COVER OF THE REACTOR VESSEL OF A NUCLEAR CENTRE, AND CORRESPONDING OPERATING METHOD**
VORRICHTUNG ZUR REINIGUNG DER AUFNAHMEMITTEL VON BOLZEN DER ABDECKUNG DES REAKTIONSGEFÄSSES EINES NUKLEAREN ZENTRUMS UND ZUGEHÖRIGES BETRIEBSVERFAHREN
APPAREIL DE NETTOYAGE DES LOGEMENTS DES BOULONS DU COUVERCLE DE LA CUVE DU RÉACTEUR D'UNE CENTRALE NUCLÉAIRE ET PROCÉDÉ DE FONCTIONNEMENT CORRESPONDANT

(43) Date of publication of application: 02.01.2019
(73) Proprietor: Ingeniería Y Marketing, S.A., 46980 Paterna (ES)
(72) Inventor: LACALLE BAYO, Jesús, E-46015 Valencia (ES); ROSELL DOMINGUIS, Carlos, E-46015 Valencia (ES); CARRILLO DE HIJES, Xavier Alberto, E-46015 Valencia (ES)
(74) Representative: Sanz-Bermell Martinez, Alejandro
(86) International application number: PCT/ES2016/070109
(87) International publication number: WO 2017/144735

(56) References cited:
- EP-A1- 2 189 256
- WO-A1-90/05596
- DE-A1- 19 509 019
- JP-A- H 024 490
- JP-A- H 024 490
- JP-A- H08 179 082
- JP-A- H09 159 787
- JP-A- 2001 059 891
- US-B2- 7 574 770
- US-B2- 7 574 770

## Description

The object of the present invention is a device that carries out a positioning on each of the accommodating means of the bolts by means of which the cover of a nuclear centre is fastened, and the cleaning of said accommodating means by inserting a brush that is lowered to the bottom, the device being provided with sealing means of the mouth and suction means for cleaning residue, as well as movement means for moving to each of the adjacent accommodating means, detection of the guide bolts for removing the cover, and retraction of at least one of the lateral positioners to move closer to the corresponding guide bolt. According to the configuration that is described, it comprises means for cleaning both with the cover removed and through the holes made in the cover. It has traction and guide means in order to move it along the perimeter of the vessel in which the accommodating means are located, or of the cover, if applicable. It can be adjusted in length and depth for an optimal adjustment whatever the distance of the accommodating means of the bolts on the inner edge of the vessel or outside of the cover, the diameter of the accommodating means or the distance therebetween. Moreover, it comprises auxiliary, lighting, image capturing or position detecting devices. Furthermore, the device can be remotely operated in a wired or wireless way, or both.

### State of the art

Among the maintenance operations that are carried out in electric energy generation plants in a thermonuclear plant, the refilling of fuel takes place, for which the reactor vessel must be opened. The cover of the reactor vessel is fastened to the vessel by means of nuts that are threaded on bolts, and these in turn are threaded on to the flange of the vessel. Similarly, to all the elements located in the contaminated area, during each maintenance operation, the nuts, bolts and accommodating means thereof must be cleaned by removing all the contaminated particles therefrom for the corresponding treatment thereof.

To remove the cover, the nuts that secure it must be removed, the bolts of said nuts must be removed and the corresponding guide bolts must be placed in predetermined positions. The guide bolts are bolts that are threaded in the corresponding accommodating means as a replacement for the bolts to which the nuts are secured, but with a greater height, which can be approximately (and by no means limiting) between 2 and 6 meters; these guide bolts enable the cover to be lifted without swaying to a certain height at which it can be moved horizontally without the risk of hitting other elements of the installation. According to the protocol followed, the cleaning of the accommodating means of the bolts can be carried out well before the removal of the cover or after the removal thereof. In each case, the problem is different; if the cleaning must be carried out before, the depth to which the brush must be lowered is greater, since the thickness of the cover must be added to the depth of the accommodating means, and if it must be carried out afterwards, the lowering is limited to the depth of the accommodating means.

Traditionally, said operation was carried out manually by one or more operators. However, given that the dose rates must be reduced to the maximum, since each operator can in this way carry out more operations, devices for streamlining the cleaning operation have been developed.

The document DE-A1-19509019 discloses a device in accordance with the preamble of claim 1.

The Estratos journal (Dep. Legal: M-7.411-1986, Spain), edition 12 (1988), which can be found at http://www.enresa.es/files/estratos/estratos12.pdf, on page 13, discloses the use of a semi-automatic device for decontaminating accommodating means of the bolts of the vessel of a nuclear reactor, which is used by a single operator, with a brush that can be moved upwards and downwards by actuation of the operator.

Although said device has a definite advantage compared to manual operation, it is not completely satisfactory given that it still requires the presence of the operator to move the equipment from one accommodating means to another accommodating means with the help of a crane in the plant.

US 7574770 describes a system for automatically cleaning the accommodating means of the bolts of the cover of the vessel of a nuclear centre. It comprises a main body with three accommodating means, one of them, the central one, being provided to support a brush support that can be moved upwards and downwards, another for an inspection device essentially formed by an image capturing camera, and a third for a securing device, all of which are movable upwards and downwards.

Said invention resolves the cleaning of an accommodating means. However, there are different problems that must be resolved:
The movement along the flange is intended to be carried out along a guide rail arranged on said flange. However, in the absence of said guide, the path can be irregular, and the adjustment of the wheel speeds is not enough to guarantee that the device is suitably positioned in the corresponding accommodating means. In addition, there are embodiments in which the cleaning of the accommodating means of the bolts is carried out from above the cover when it has not been removed, which US 7574770 cannot do.

With the device described in US 7574770, when there are guide bolts that have been located for the removal of the cover and remain in the flange throughout the process of the maintenance operation, the accommodating means arranged in a position adjacent to each of the bolts cannot be cleaned and placing guides in sections between guide bolts is not easy or operative.

Although the main body is provided with an angular shape to adapt to the accommodating means of a specific flange, the cleaning of the accommodating means of the bolts in other flanges requires the cleaning means to be located at different distances or angles, depending on the number of accommodating means, the diameter of the vessel, and also the distance of the accommodating means of the bolts on the edge of the vessel.

Although suction means are described, means for sealing and containing the volume of the accommodating means during the cleaning operation are not described.

Due to the fact that the brush support must be accommodated when it is retracted inside the main body, the operating height is limited, and insufficient, when the cleaning must be carried out from the upper part of the cover. Otherwise, the size and weight of the main body would be extremely large.

Moreover, as shown, said device has a number of recesses that give rise to difficulties in cleaning and decontamination after use.

Therefore, an object of the present invention is to provide a device for cleaning the accommodating means of the bolts of the cover of the reactor vessel of a nuclear centre that resolves all the aforementioned drawbacks, has a simple construction and is therefore inexpensive, is streamlined in the operation thereof, adjustable in terms of depth of the operation meaning it can actuate both on the flange of the vessel and on the cover, adjustable in terms of the angle corresponding to the diameter of the vessel, adjustable in terms of the distance between accommodating means and the distance of said accommodating means on the inner edge of the vessel or outer edge of the cover, and an ergonomic design that is easy to handle and minimising the hollows, thereby improving the decontamination process. In addition, it enables the cleaning of the accommodating means adjacent to the guide bolts that are arranged in the flange when the cover is removed and until it is returned to its place.

This object is achieved by the device in accordance with claim 1 and the method in accordance with claim 11.

### Description of the invention

The object of the present invention, in accordance with claim 1, is a device for cleaning the accommodating means of the bolts of the cover of the reactor vessel of a nuclear centre that is formed by a frame formed by two lateral pillars, and by a lower support. In said device, reference to inner side shall be that which is close to the geometric axis of the flange or cover on which it moves, and outer side to that which is arranged in the opposite direction.

The lower support is formed by two pieces joined to each other. The central part of the joint is hollow, an annular joint, and on which runs the casing of a rotation shaft of a cleaning brush.

The lower support is provided with wheel assemblies, normally pairs of wheels, that support respective drive belts. At least one of the wheels of each wheel assembly is motorised, by means of a motor and corresponding movement reduction and/or transmission elements. In particular, each of the connected pieces forming the lower support is provided with drive belts on each side thereof.

On one of the sides of the device (the inner side if the device is cleaning the accommodating means of the bolts from the flange, and the outer side if it is cleaning them from the cover), a mechanical sensor is arranged on each of the connected pieces for adjusting the distance of the device on the inner edge of the flange or outer edge of the cover of the vessel. Said mechanical sensors are formed by freely rotating wheels with respect to a vertical shaft that is located under the support position of the drive belts, such that when the movement produced by said drive belts has a greater curvature (greater radius, on the flange) or smaller curvature (smaller radius, on the cover), the mechanical sensors limit the movement by maintaining the device in the correct position with respect to the corresponding edge.

As the connection of the lower support can be carried out and adjusted towards both sides (from a rectilinear alignment), the mechanical sensor is preferably located on only one of the sides, being on the inner side in one of the angular positions of said lower support, or on the outer side, in an opposite angular position, and obviously the device must also be placed with the sensors inwards or outwards.

As noted, the distance at which the sensor is found from the device, and therefore, at which it must be located with respect to the edge of the flange or cover, is adjustable. Therefore, for example, the sensor assembly is formed by, among other elements, two pieces that can slide with respect to each other, each one provided with a groove, with a securing screw of both sliding pieces. Normally, one of the sliding pieces is secured in a fixed manner to one of the connected pieces, and the other piece to the wheel support. At least one of the grooves can be provided with a graduated scale for adjustment in the workshop prior to use, or the adjustment can also be carried out in the workshop on a model of a portion of the flange or cover at a 1:1 scale. The vertical shaft can also be secured in a variable position, for example in a slotted hole of the corresponding support.

According to a particular embodiment, the pillars are formed by respective pairs of columns; each pair of columns is preferably arranged on a plane parallel to the connection shaft of the lower support. The columns are joined to each other by means of a joining piece at the upper portion thereof, and to the lower support, at the lower portion thereof. Situated in each pillar, and particularly between each pair of columns and along the entire length thereof or a part thereof, is a worm screw moved by a motor, said motor normally being arranged in the upper part of the pillars, and particularly of the joining piece of the respective pair of columns.

An upper support is arranged in a sliding manner on the lateral pillars. The upper support is also connected on the central part thereof, such that both the upper support and the lower support are adjusted such that they adopt the same angle and towards the same side. The upper support supports the brushing assembly, and particularly the motor that transmits the movement to said brush through the corresponding shaft. According to a preferred configuration, the motor of the brush is supported by a piston (pneumatic, electric or mechanical slide) located under the upper support, such that the shaft that carries the rotating brush has the minimum length, in turn minimising buckling and eccentricity, and thus the vibration, and therefore improving the smooth operation and duration of the device. The shaft of the cleaning brush passes through, as noted, the connection element of the parts constituting the lower support.

It is possible, within the scope of the invention, but less preferably, that there is an additional upper support, which is located in a fixed way in the upper part of the lateral pillars. Said additional upper support would also be connected in the central part thereof. However, said additional upper support is not necessary if the upper support is sufficiently robust.

The upper support can slide along the lateral pillars. In particular, the upper support is provided with a threaded accommodating means on each side, through which the respective worm screw passes, such that the synchronised rotation of the worm screws actuated by the respective motors and position and movement sensors thereof, cause the controlled upwards and downwards movement. However, any other means for moving the upper support with respect to the lower support along the lateral pillars is also comprised within the scope of the present invention, such as for example, and by no means limiting, a lifting or lowering gear or cable system of said support on the end of the pillars, or a telescopic system for shortening said pillars.

The present invention further comprises a pair of supports that carry respective positioning pins, each one of said supports arranged in the respective outer end (opposite the connection end) of the corresponding connected portion that forms the lower support.

Said supports of the pins are retractable, such that they can be lifted or folded, particularly when the device is moved to the cleaning position of an accommodating means adjacent to a guide bolt. Thus, said supports can adopt a first position wherein the pin is located in an accommodating means adjacent to that being cleaned, a second position wherein the support is lifted, being in a condition to be transferred to an adjacent hole, and a third position wherein the pin is retracted and the place it occupied with respect to the device of the invention can be occupied by a guide bolt.

The supports of the pins, in the first position, are normally and approximately located between the drive belts, which are located on the outer part, towards the outer edge or the flange, and on the inner part, towards the edge of the vessel or body of the cover.

The supports of the pins are adjustable such that the distance of the shaft of the brush can be varied, according to the specific position of the accommodating means of the bolts according to the specific configuration of the centre. Each support can be simply extended or retracted by means of sliding elements, similarly to the adjustment of the sensors, and fixed in the desired position by means of screws. Optionally, the positioning pins are what can move with respect to the corresponding support, varying the distance from the centre of rotation (of the shaft of the brush) to the positioning area (position of the adjacent accommodating means).

The supports of the pins are connected at the inner end thereof (the closest to the connection shaft of the lower support) to a mobile piece. The mobile piece can be lifted or lowered, and with said mobile piece, the support of the pin is also lifted or lowered. In accordance with a preferred embodiment, the lifting or lowering of the mobile piece, on which the support of the pin is connected, takes place by means of worm screws arranged in lateral structures of the lower support and threaded coupling of said mobile piece, similarly to the upper support of the brush.

A piece with a guide profile, usually a groove, is arranged on at least one and normally both sides; said guide profile having a first substantially vertical portion at a distance from the worm screws that move the mobile piece, a second oblique or curved portion and also possibly a third portion that is also substantially vertical, close to said worm screws. The support of the pin has, corresponding to said guide, a follower (normally a follower roller, wheel or shaft). Said follower is located in a position relatively distanced from the connection shaft (in one or both sides of the support), determining a fixed distance between shaft and follower.

When the pin that is inserted in the accommodating means of a bolt must be removed in order to be transferred to the following accommodating means, before the movement of the device, the worm screws lift the mobile piece to which the shaft of the support of the pin is connected, such that the guide follower is forced to follow the first vertical portion of the guide profile (since it would otherwise vary the distance between shaft and follower, which is impossible because the support is rigid), vertically removing the pin from the accommodating means; in this position it can move to the following accommodating means, reversing the operation to reinsert the pin into the accommodating means; when the following position is occupied by a guide bolt, the worm screws then continue the movement thereof, lifting the connection shaft of the support of the pin even further, such that the guide follower passes from the first vertical portion through the second oblique portion to the third vertical portion, such that the support of the pin is forced to adopt an almost vertical position, thereby being retracted.

The positioning pins are arranged integral to the supports and are moved or displaced with the same.

The pins constitute the positioning element of the device, and before the use thereof they are adjusted, as noted, to the desired geometry.

The shaft of the brush is encapsulated along the entire length thereof, from the upper support to the lower support, and has an adjustment gasket below the lower support with which to hermetically seal the accommodating means in the cleaning phase and preventing any type of contaminating particle from exiting outside. The adjustment gasket is annular shaped, and the shaft of the brush passes through it, leaving the communication with a suction duct free.

The device of the present invention further comprises a suction duct for the dirt removed from the accommodating means of the bolt, which according to a preferred embodiment is located by way of covering around the encapsulating covering of the shaft of the brush; the suction duct must be connected to an exterior suction device, independent from this invention. The suction duct arrives below at least to the adjustment gasket, and that in the upper part thereof it continuously covers or forms one or more branches in the area in which the actuation motor of the brush is located.

The lower support is provided with various sensors, particularly to identify the position of the accommodating means, and possibly viewing cameras.

The height of the device of the invention can be simply reduced or increased by substituting the pillars (profiles provided with racks or similar elements, and the shaft, encapsulation and covering of the brush), all of these elements having a reduced cost, or by means of telescopic sliding.

The present invention, in accordance with claim 11, also relates to a method for cleaning the accommodating means of the bolts of the cover of the reactor vessel of a nuclear centre that uses the previously described device.

In accordance with said method, the following operations are carried out in the workshop or on site:
- Adjustment of the angular position of the parts constituting the device, in accordance with the geometric parameters of the vessel, or on a template of a portion of the flange or cover of the vessel; and consequently, the adjustment of the angular position of the parts constituting the upper body;
- Adjustment of the distance of the supports of the pins to the shaft of the brush, in accordance with the distance between the accommodating means of the bolts on the flange or cover of the vessel;
- Adjustment of the mechanical sensors that adjust the distance of the device to the inner edge of the vessel or outer edge of the cover, remaining in the inner area, with an angle less than 180°, when the accommodating means must be cleaned from the flange, and in the outer area in the area with an angle greater than 180° when the accommodating means must be cleaned from the cover.

And once the device is arranged in the cleaning area, with the pins in retracted or partially retracted position:
- Movement to the position of a first accommodating means to be cleaned, according to a signal provided by the position sensors; said operation is carried out with the positioning pins folded in retracted mode:
- Folding of the pins (supports of the pins) towards the work position, such that said pins coincide with the accommodating means adjacent to that being cleaned; when the adjacent accommodating means is provided with a guide bolt, the pin corresponding to said guide bolt is not folded;
- In the cleaning position, lowering the upper support with respect to the lateral pillars, through the racks in said lateral pillars or by means of equivalent mechanical means; and with the lowering of the upper support:
   o support of the adjustment gasket in the mouth of the accommodating means of the bolt;
   o rotation of the brush, and with it, dragging the dirt in the accommodating means;
   o connection of the suction means, if they are not already,
   The length of the path of the brush (of the lowering of the upper support with respect to the lateral pillars) can be programmed or be actuated by bottom detectors of the accommodating means;
- Lifting of the brush
- Lifting of the upper support;
- Partial folding of the pins or of the supports of the pins, said total lifting being when a cleaning position adjacent to a guide bolt is reached;
- Movement towards a new position, by activation of the motors that actuate the drive belts;

It must be noted that any of the actuations described, motors, etc. can be moved by electric, hydraulic or pneumatic means without the actuation means being limited in the present invention, except that of the particular embodiments described.

### Brief description of the drawings

With the aim of illustrating the explanation below, we attach fourteen pages of drawings to the present specification, in which seventeen figures represent, by way of example and not limitation, the essence of the present invention, and in which the following may be seen:

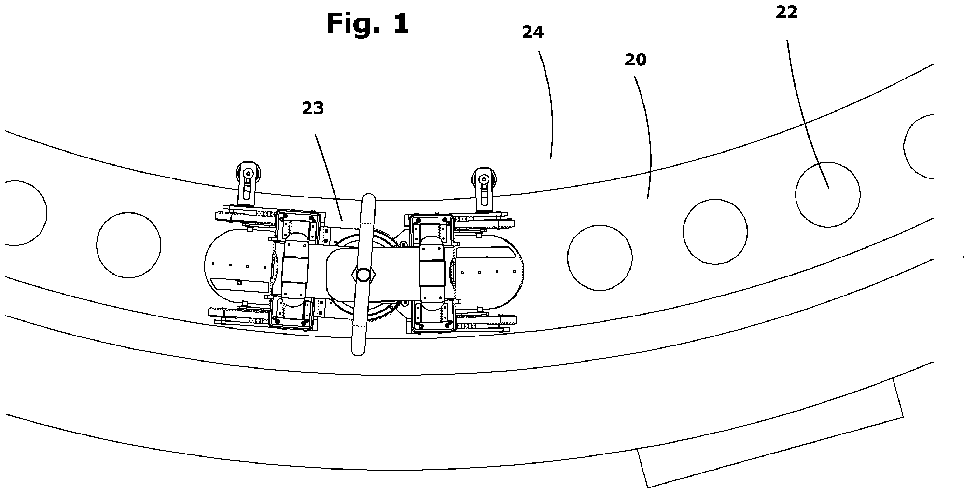

- Figure 1: shows a perspective view of the device of the invention, arranged outside on a cover of the reactor vessel;

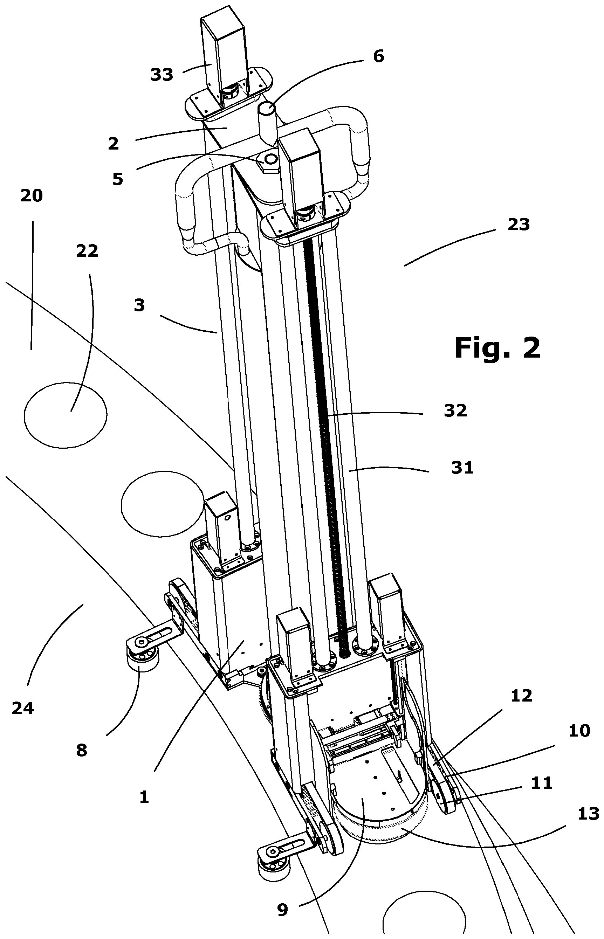

- Figure 2: shows a top view of the device of Figure 1;

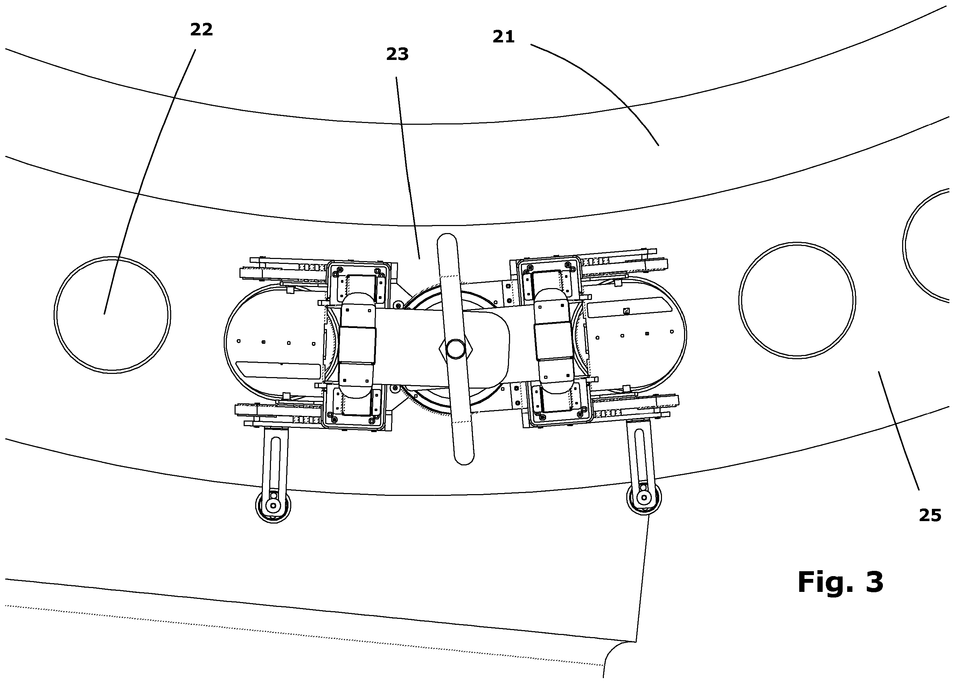

- Figure 3: shows a perspective view of the device of Figures 1 and 2 located inside the flange of the vessel;

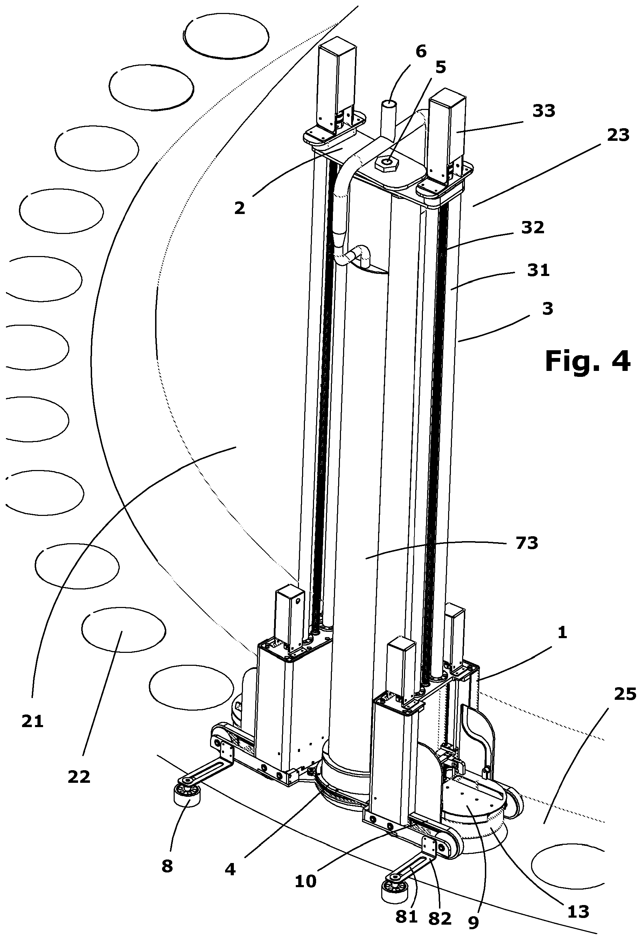

- Figure 4: shows a top view of the device of Figure 3;

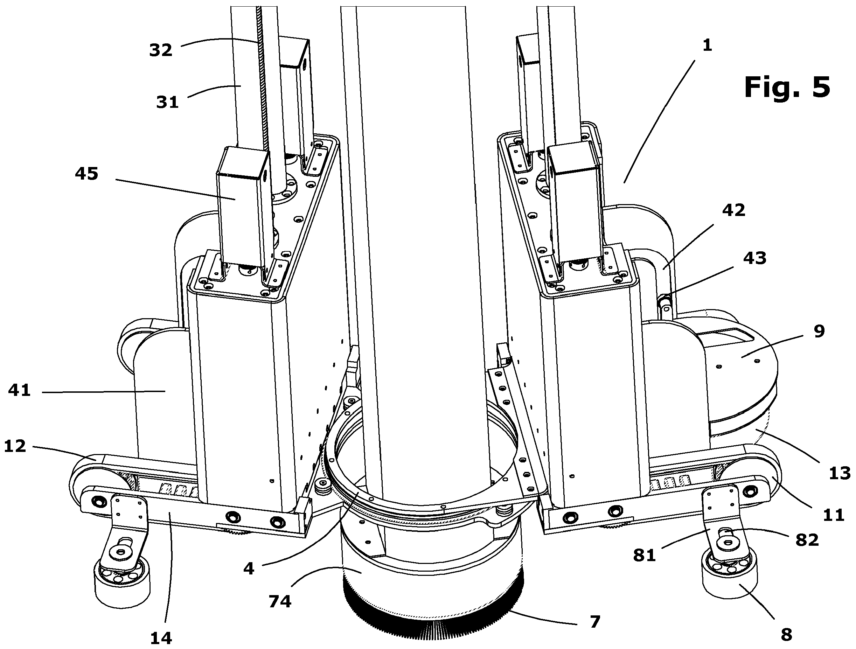

- Figure 5: shows a more detailed perspective view of the device and particularly the lower positioning and cleaning area;

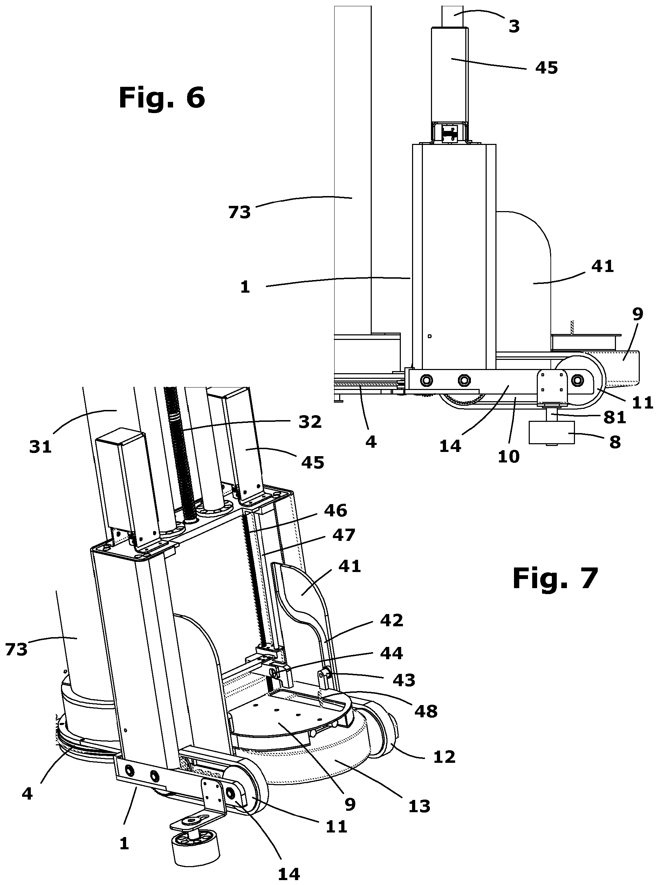

- Figure 6: shows a side view of a detailed view of one of the parts of the lower support, with the support of the positioning pin in a lower position;
- Figure 7: shows a perspective view of the detailed view of Figure 6;

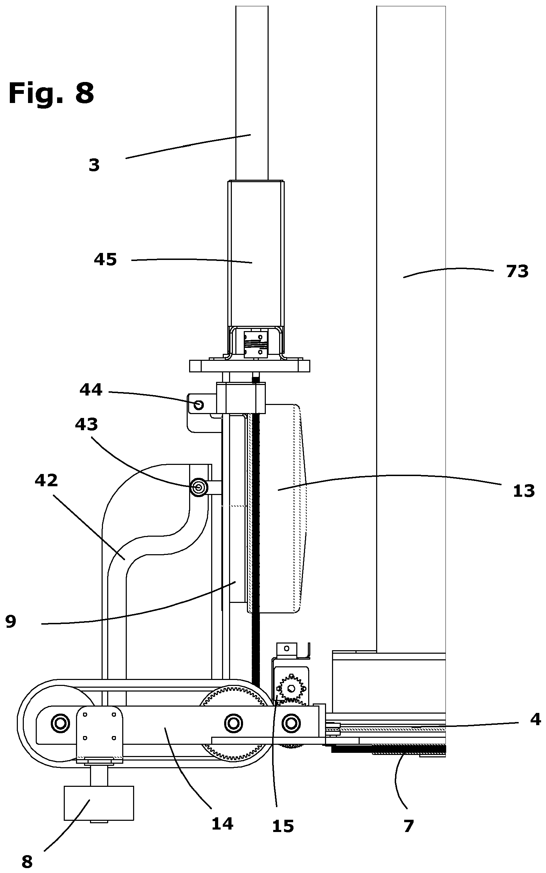

- Figure 8: shows a side view similar to that of Figure 6, but devoid of covering elements for an improved view, with the support of the positioning pin retracted;

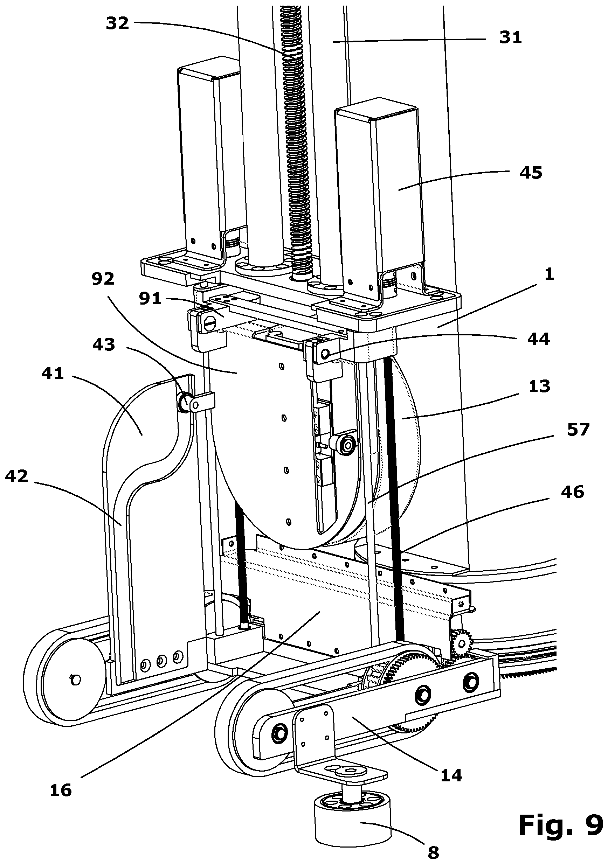

- Figure 9: shows a perspective view of the view of Figure 8;

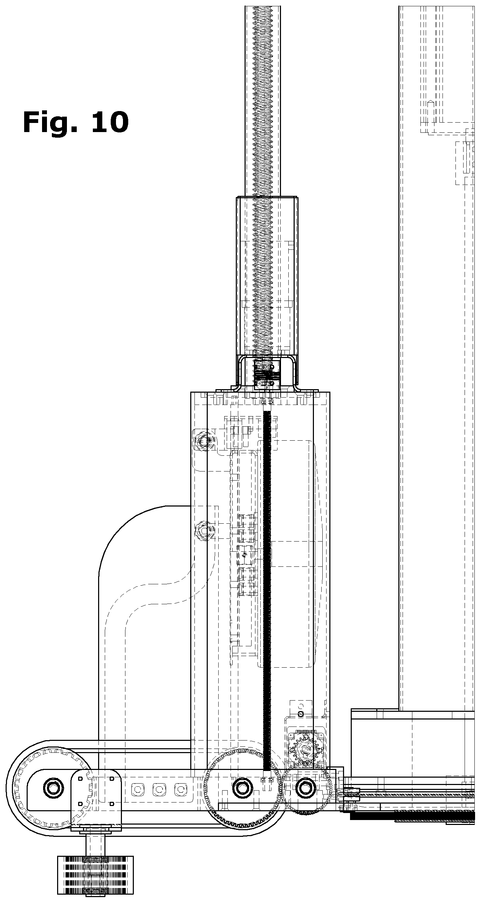

- Figure 10: shows a cross-sectional view of one side of the lower area of the device;

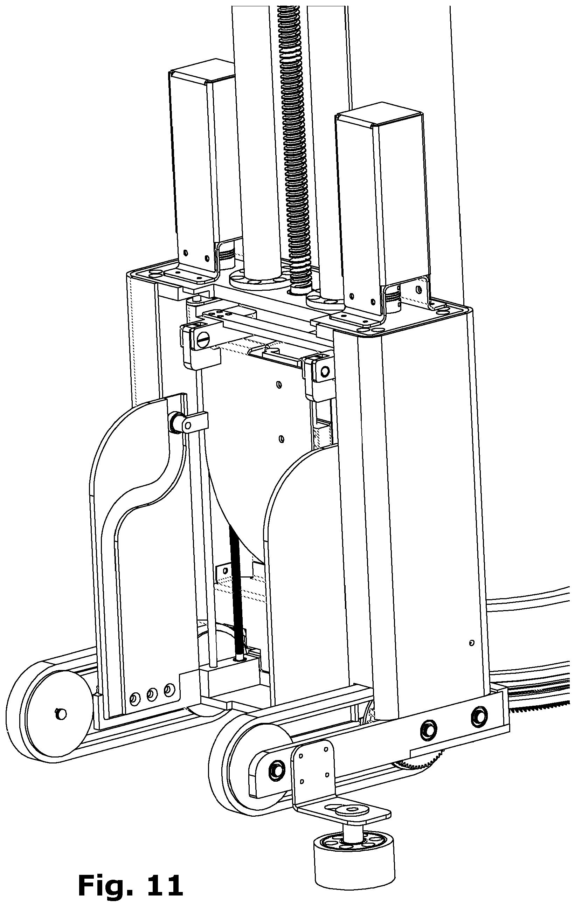

- Figure 11: shows a view similar to that of Figure 6, with the support of the positioning pin in a retracted position;

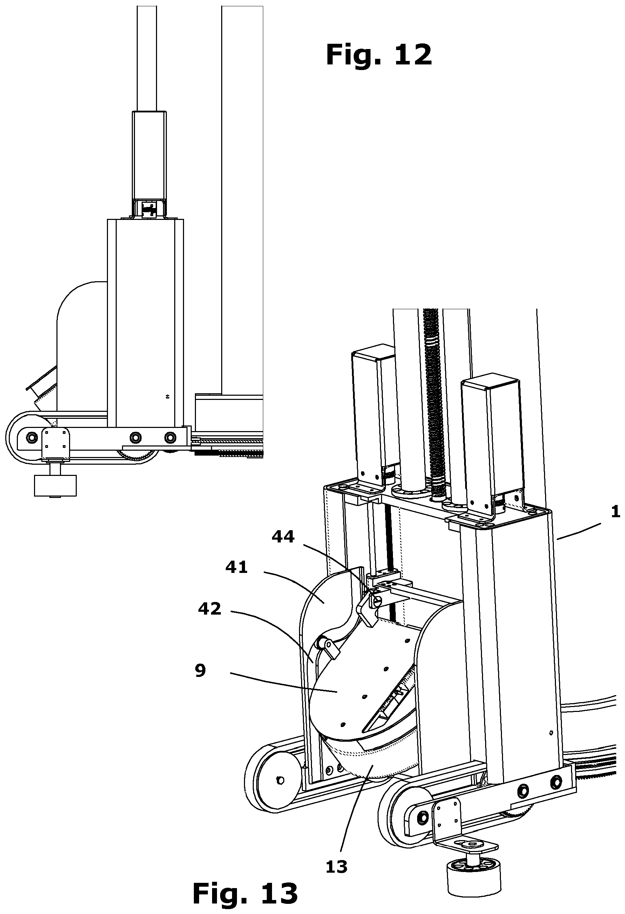

- Figure 12: shows a side view similar to that of Figure 8, with the support of the positioning pin in an intermediate retracted phase;
- Figure 13: shows a perspective view of the device of Figure 12;

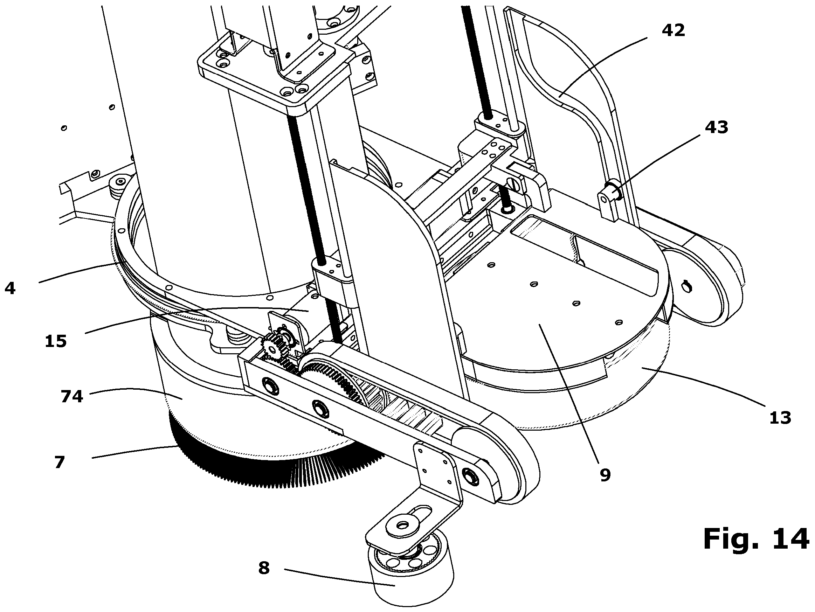

- Figure 14: shows a perspective view of a detailed view of the support of the positioning pin, of the lower support and of the cleaning brush;

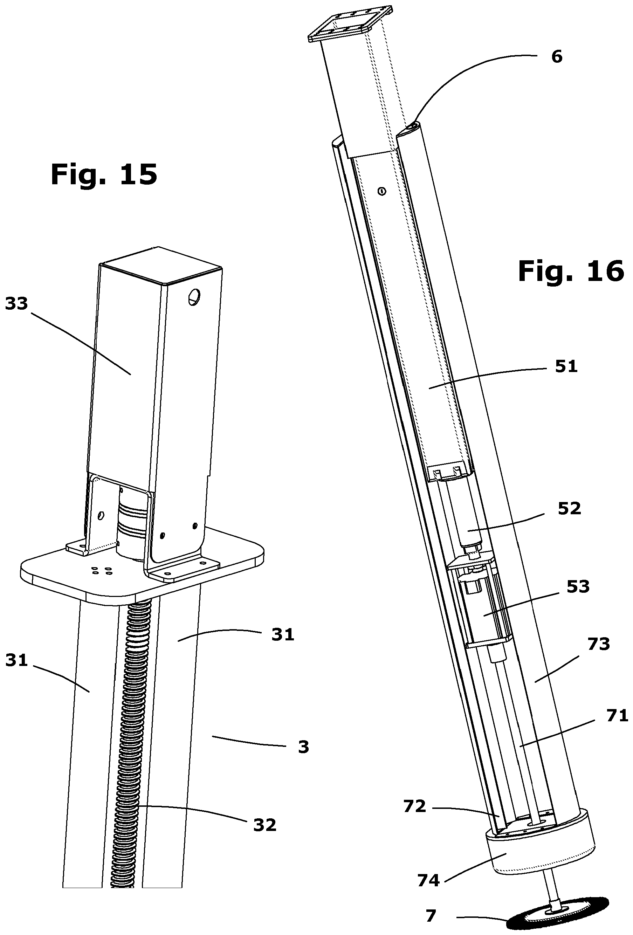

- Figure 15: shows a perspective view of a detailed view of the lateral pillars;
- Figure 16: shows a perspective view of the support and covering of the cleaning brush, partially devoid of the covering thereof for a better view; and

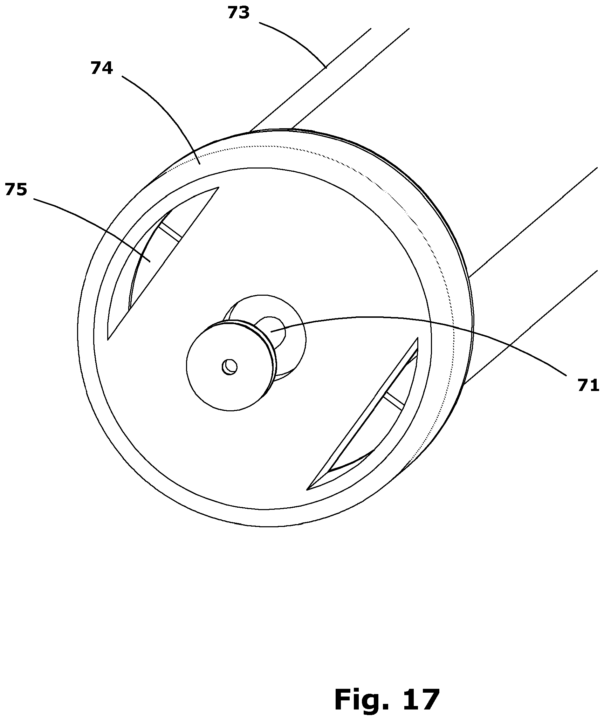

- Figure 17: shows a perspective view from a lower point of view of the lower end of the shaft of the brush.

In said figures, the following reference numbers can be seen:
- 1: Fixed body
- 2: Mobile body
- 3: Lateral pillar
- 4: Lower central annular connected joint
- 5: Upper central connected joint
- 6: Suction mouth
- 7: Brush
- 8: Sensor
- 9: Support of the pin
- 10: Drive means
- 11: Wheels
- 12: Drive belt
- 13: Pin
- 14: Fork of the lower body
- 15: Actuation motor for the drive means
- 16: Protective case of the motor 15
- 20: Flange
- 21: Cover of the vessel
- 22: Accommodating means
- 23: Device
- 24: Hollow of the vessel
- 25: Edge of the cover of the vessel
- 31: Column
- 32: Worm screw
- 33: Actuation motor for the worm screw 32
- 41: Support plate of the guide of the pin
- 42: Guide of the support of the pin
- 43: Guide follower of the support of the pin
- 44: Connection of the support of the pin
- 45: Actuation motor for lifting/lowering the pin
- 46: Guide column for lifting/lowering the support of the pin
- 47: Worm screw for lifting/lowering the support of the pin
- 48: Member for adjusting the extension position of the support of the pin
- 51: Fixed part of the extender device
- 52: Mobile part of the extender device
- 53: Actuation motor for the brush
- 71: Shaft of the brush
- 72: First covering of the shaft of the brush
- 73: Second covering of the shaft of the brush, for suction
- 74: Support of the brush
- 75: Suction windows in the support of the brush
- 81: Support of the sensor
- 82: Elongated or slotted hole for adjusting the sensor
- 91: First liftable part of the support of the pin
- 92: Second connected part of the support of the pin

### Description of the embodiments of the invention

The invention proposed consists of a device (23) for cleaning the accommodating means of the bolts of the cover of the reactor vessel of a nuclear centre.

The cleaning of the accommodating means (22) once the bolts securing the cover (21) of the reactor vessel have been removed can be carried out in two ways, depending on the work protocols of the centre:
- Without removing the cover (21), surrounding the edge (25) of said cover; or
- Once the cover is removed, moving the cleaning device along the flange.

In either of the two cases, it is necessary for the radial movement of the device (23) to be precise in order to correctly carry out the cleaning operations.

When it is carried out without removing the cover (21) it is necessary for the cleaning device (23) to move on the edge (25) without the possibility of falling outwards.

On the contrary, when the cover (21) has been removed, the cleaning must be carried out by running the circumference of the flange (20); in this case, the risk of an incorrect trajectory is falling inside the hollow (24) of the vessel.

As such, the device (23) proposed as object of this invention consists of a mobile device that can move along the flange (20) and the cover (21) of the reactor vessel.

In order to be able to adjust to any cover (21) or flange (20) diameter, the device (23) is formed by a fixed body (1) and a mobile body (2), each one formed by two parts or halves connected with respect to a single central geometric shaft, which enables a suitable angular positioning in accordance with the angular positioning of the parts constituting the lower support.

In order to be inserted in each accommodating means (22), it has a lowering mechanism comprising:
- A fixed body (1) that is made up of a lower body and particularly by an assembly of lower elements, and
- A mobile body (2) comprising an upper body such that said mobile body can be moved vertically closer to or further from the fixed body.

The fixed body (1) comprises a vertical movement support. Said support is preferably formed by two pillars (3), one corresponding to each connected half. Particularly, each of the pillars (3) is formed by two columns (31) that are separated from each other, arranged on a vertical plane tangential to the connection shaft of the connected halves. The columns are joined to each other at the upper part thereof and they are also joined to the lower body.

The mobile body (2) carries a brush (7), the actuation and movement means thereof, and the corresponding suction duct.

The two connected halves that make up the fixed body (1) are joined to each other by means of an annular connected joint (4), which enables a rotation of one half with respect to the other, and wherein there is a central hollow. Said central hollow is passed through by the brushing means, and particularly when the mobile body (2) is lowered.

Similarly to the fixed body (1), the mobile body (2) is also formed by two parts or halves, which are also connected to each other by means of an upper connected joint (5). Unlike the connection of the fixed body (1), the connection of the mobile body does not need to be hollow (annular), although said option could be advantageous for the passage of suction, power supply or control cable ducts.

According to another option, the pillars are also joined at the upper part thereof by an additional upper support that is also connected in the central portion thereof.

The two parts or halves that form both the fixed body and the mobile body are susceptible to being fixed in any angular position, and particularly can adopt an angle of 180°, wherein the connected parts are arranged in a rectilinear position, and an angle of ±90°, that is, towards either side.

According to a particular embodiment, a worm screw (32) is arranged between each pair of columns (31) that extends along the lifting/lowering path of the mobile body with respect to the fixed body, which is suitably actuated by a corresponding motor (33). The mobile body (1) comprises an upper body that forms the two aforementioned halves, each one of which is joined to the worm screw (32) by means of a connected joint. The columns (31) also form a guide means in the lowering/lifting movement, such that the rotation of the worm screws in one direction and in the opposite direction respectively cause the lifting or lowering of the mobile body (1). Obviously, the motors (33) of the worm screws (32) of both sides are duly synchronised by mechanic or electronic means. Preferably, the actuation motor of each worm screw is arranged in the upper part of the pillars (3).

At least the lower annular connected joint (4) is susceptible to being fixed in a specific angular position. The upper connected joint can also be fixed. Due to the fact that the use of the device (23) takes place in contaminated areas or areas at risk of being contaminated, the angular adjustment must be carried out outside said area.

The fixed body (1) is provided with exterior sensors (8). Said sensors are supported on both supports (81) that distances them from the device (23), said sensors (8) being located under the contact level of the wheels with the flange or cover, said sensor being, when in a condition of use, inside the basin of the vessel, or on the exterior of the cover of the vessel, outside the movement surface. Therefore, the distance of the accommodating means (22) on the inner edge of the vessel (or exterior of the cover) is variable according to the centre concerned, the distance at which these sensors (8) are located is adjustable. As such, the sensor assembly is particularly formed by the support (81) arranged externally to the lower body of the fixed body, and transversally thereto, provided with an elongated or slotted hole (82) that supports a vertical shaft wherein a freely rotating wheel is mounted with respect to said shaft, wherein the position of the vertical shaft in said support, and therefore of the wheel mounted therein is adjustable, said position determining the distance of the fixed body on the edge of the flange or the cover.

The parts that constitute the lower body of the fixed body (1) are provided with forks (14), one on each side of the device (23) and oriented outwards. Each fork (14) is provided with drive means (10) in each one of the two sides thereof for the movement along the flange or corresponding flange cover, the drive means are formed by a rolling assembly arranged on each side of each connected part of the lower body of the fixed body (1).

Particularly, the drive means are formed by a motor (15) that actuates one or more wheels (11) that support a drive chain or belt (12). The drive means (10) of each side of each fork (14) are independent from each other, although they can be suitably synchronised by programming or by other means to adjust the respective rotation speeds to the corresponding bend radius.

The lower body of the fixed body (1) comprises a protective case of the motor (15).

A positioning pin (13) is located accommodated in each fork (14). The pin is located in the accommodating means (22) adjacent to that which is being cleaned. As the device (23) must be moved from one pin to the other, once each cycle is completed, the pins (13) that are inserted in said accommodating means (22) must be lifted, such that they can adopt at least one position wherein it is located in the accommodating means adjacent to that being cleaned, and a lifted position, wherein it can be moved.

To do so, there is a support (9) that supports the pin (13). The support (9) is divided into two parts, a first part (91) closer to the central shaft of the device (23), and which is susceptible to being lifted or lowered in a vertical plane, as shall be seen below, and a second part (92) further from the shaft of the device (according to the insertion position thereof in the accommodating means (22)). The first part (91) and the second part (92) of the support (9) are connected to each other in a connection (44).

The second part (92) of the support (9) of the pin (13) is provided with a guide follower (43); said follower is formed by a freely rotating wheel that is inserted in a guide (42). The guide (42) is located vertically in a support plate (41) in at least one, and normally parallel in both sides of each fork (14), and forms three portions, substantially, as follows:
- A first substantially vertical lower portion, at a distance from the elevation plane;
- A second substantially oblique central portion, wherein the elevation of the guide is moved close to the elevation plane; and
- A third substantially vertical upper portion, close to the elevation plane.

Thus, the retraction of the pin is carried out by folding downwards as the support of said pin is lifted when the follower is located as of the second portion of the guide (42), and the third portion.

Similarly to the columns (31) and the worm screw (32) of the fixed body (1), each lower half of the fixed body (1) is provided with a guide column (46) and a worm screw (47) actuated by a motor (45), parallel to said guide column (46), preferably on both sides of each fork.

The folding position of the pin thus has a single degree of freedom, determined by the lifting position of the connection shaft depending on the rotation of the worm screw (46), which in turn determines a position of the cam follower.

When the device (23) must be moved from one accommodating means to the adjacent one, the pins must be lifted. For this purpose, the motors (45) that rotate the worm screws (46) of the two sides of the two forks are actuated. This forces the first part (91) of the support (9) of the pin (13) to be lifted in a vertical direction. The connected area of the second part of the support (9) of the pin (13) is lifted with the first part (91). Were it not retained in the guide (42) by the follower (43), the tendency of the pin would be to maintain the end distanced from the second part (92) as low as possible. However, as the distance between the connection shaft (44) and the guide follower (43) is invariable, the support (9) of the pin (13) is lifted substantially parallel, since the follower is in the first portion, enabling the movement of the device to a new position.

As the distance between accommodating means (22) is variable, it is intended that the position of the supports of the pins can be variable or extended with respect to the connection shaft of the fixed and mobile bodies, from a position of the pin closest to said shaft, corresponding to the accommodating means of bolts closest to each other, to a position further from said shaft, in the opposite case.

Due to the existence of guide bolts, particularly when the cover has already been removed, one of the pins (13) must be removed from the position that said guide bolt will occupy inside the fork (14). To do so, the motor is actuated until at least the guide follower has travelled the entirety of the second portion of the guide (42), in which it is progressively inclined depending on the lifting, the end thereof moving closer to the elevation plane. From this position it can continue to lift, making the guide follower (43) run through the third portion of the guide. In this case, the pin is located inside, oriented towards the central connection shaft of the device (23), enabling the fork to be located on both sides of the corresponding guide bolt.

It is intended that the support (9) of the pin is provided with an adjustment member for fixing the same in the desired degree of extension, that is, of separation with the connection shaft of the fixed and mobile bodies, respectively.

The mobile body (2) supports, according to a particular embodiment, a support of the actuation motor (53) for the rotating cleaning brush (7). It is intended that the support is provided with an extender device or extending body, which can be actuated by pneumatic, hydraulic or mechanical means, with a fixed part (51) joined to the upper body of the mobile body (2), and a mobile part (52), the end of which supports the motor of the brush. This minimises the length of the shaft of the brush (71), preventing vibrations, and enabling the cross section thereof to be smaller than if the length thereof were longer.

The extender device, the motor (53) and the brush (7) are protected by a first covering (72); this first covering ends at the lower part thereof in a support of the brush (74); said first covering (72) is substantially sealed and is provided with a retention and sealing gasket in the area of the support of the brush (74), and through which the shaft (71) of the brush passes.

A second covering (73) is located externally to the first covering (72). Said second covering (73) can completely or partially surround the first covering, or constitute a body parallel to said first covering (72). This second covering (73) is joined to the support of the brush (74), which has suction windows (75), said second covering (73) constituting a suction duct or channel that ends at the top with a suction mouth to be connected to an external extractor.

According to one option, the first covering of the shaft of the brush and the second covering of the shaft of the brush can be extended, for example by means of a bellows-type drive or a concentric telescopic joint.

As auxiliary elements, it is intended that the lower support is provided with sensors, said sensors being able to be integrated in one or in the two pins, or separately from each other, said sensors including one or more of the following
- sensors for detecting the accommodating means;
- depth sensors for the accommodating means;
- limit switch for the axial movement of the brush;
- sensors for detecting guide bolts;
- lighting devices of the path of the device, forwards and/or backwards;
- lighting devices associated to one of the lateral pins;
- image viewing and/or recording cameras of the path of the device and/or the inside of the accommodating means of the bolts.

## Claims

1. A device for cleaning the accommodating means of the bolts of the cover of the reactor vessel of a nuclear centre, comprising:
• Brushing means of the accommodating means of the bolt, which can move upwards and downwards along a vertical shaft;
• a suction means of the residue dislodged in the accommodating means of the bolt;
• a pair of positioning elements in the accommodating means adjacent to that being cleaned;
wherein the device is formed by:
• a fixed body (1); and
• a mobile body (2) that can move upwards and downwards along the fixed body;
wherein the fixed body is formed by:
• a pair of lateral pillars (3), one located on each side of said fixed body (1);
• a lower body that forms a lower joint support between the pair of lateral pillars, said lower body being divided into two parts joined to each other by means of a central connected joint (4);
• wherein the central connected joint is an annular joint wherein the centre is hollow;
wherein the mobile body is formed by:
• an upper body that constitutes an upper support that supports the brushing means comprising a rotating cleaning brush (7); said upper body being divided into two parts joined to each other by means of a central connected joint (5);
• wherein the parts that constitute the upper support are susceptible to angular positioning in accordance with the angular positioning of the parts constituting the lower support;
• wherein the mobile body supports the brushing means of the accommodating means of the bolt;
wherein a connection shaft of the two parts that form the lower body and a connection shaft of the two parts that form the upper mobile body are coaxial; and
wherein the brushing means run through the hollow of the annular connected joint (4) of the lower body,
**characterised in that** each of the parts that constitutes the lower body of the fixed body externally forms, towards the side opposite that of the connection shaft, a fork (14) wherein a positioning pin (13) is located;
wherein the positioning pin (13) is integrally supported in a connected support (9) that enables said pin (13) to adopt at least one position where it is located in the accommodating means adjacent to that being cleaned, and in a lifted position;
and wherein the fork (14) is provided with a guide (42) or cam that has at least one first vertical portion, at least one second oblique or curved portion, and possibly a third vertical portion, and **in that** the pin (13) or the support (9) of the pin comprises followers (43) susceptible to sliding on the guide (42) or cam, and **in that** the connected support is susceptible to lifting and lowering, wherein the upper end of the second oblique or curved portion and the third vertical portion determines a third retracted position of the pin, the retraction of the pin (13) being carried out by folding downwards when the support (9) of said pin is lifted, the folding position of the pin having a single degree of freedom, determined by the lifting position of the connection shaft (44), which in turn determines a position of the cam follower (43).

2. The device for cleaning the accommodating means of the bolts of the cover of the reactor vessel of a nuclear centre, according to claim 1, **characterised in that** each of the lateral pillars is formed by a pair of columns (31) joined to each other at the upper part thereof and also joined to the lower body the pillars (3) being joined at the upper part thereof by an additional upper support, said additional upper support also being connected in the central part thereof.

3. The device for cleaning the accommodating means of the bolts of the cover of the reactor vessel of a nuclear centre, according to claims 1 to 2, **characterised in that** each pillar (3) incorporates a worm screw (32), which extends along the lifting/lowering path of the mobile body with respect to the fixed body, which is actuated by a motor (33) and the rotation of which is electronically or mechanically synchronised with the rotation of the worm screw (32) of the other pillar (3), and **in that** the parts that form the upper body of the mobile body are joined to said worm screws by means of a corresponding threaded accommodating means, such that the rotation of said worm screws (32) determines the lifting/lowering movement of said mobile body with respect to said fixed body.

4. The device for cleaning the accommodating means of the bolts of the cover of the reactor vessel of a nuclear centre, according to any of claims 1 to 3, **characterised in that** the lower body of the fixed body (1) and the upper body of the mobile body (2) are connected between an angle of 180°, wherein the connected parts are arranged in a rectilinear position, and an angle of 90° towards either side, being the two connected parts that form the lower body of the fixed body (1) susceptible to being fixed in any angular position and the connected parts that form the upper body of the mobile body are likewise susceptible to being fixed in an angular position in accordance with the angular position of the lower body.

5. The device for cleaning the accommodating means of the bolts of the cover of the reactor vessel of a nuclear centre, according to any of claims 1 to 4, **characterised in that** a driving motor (53) of the cleaning brush (7) is supported on the mobile part of an extending body (51, 52) by pneumatic, hydraulic or mechanical means, the fixed part (51) of said extending body being directly or indirectly joined to the upper body of the mobile body (2).

6. The device for cleaning the accommodating means of the bolts of the cover of the reactor vessel of a nuclear centre, according to claim 5, **characterised in that** the shaft of the brush (7) is provided with a first covering (72) that protects a rotation shaft (71) of said brush, the motor (53) and the extending body (51, 52), also having a lower sealing gasket through which the rotation shaft (71) of the brush passes; the first covering of the shaft (72) of the brush is provided with a second covering (73) that constitutes a suction channel; the first covering (72) of the shaft of the brush and the second covering (73) comprising extension means.

7. The device for cleaning the accommodating means of the bolts of the cover of the reactor vessel of a nuclear centre, according to any of claims 1 to 6, **characterised in that** it comprises an assembly of drive means to move along a flange or corresponding flange cover, the drive means consisting of a rolling assembly forming a traction element arranged on each side of each connected part of the lower body of the fixed body (1), each traction element being formed by two or more wheels (11), of which at least one is connected to a motor (15), said wheels (11) being provided with a drive chain or belt (12).

8. The device for cleaning the accommodating means of the bolts of the cover of the reactor vessel of a nuclear centre, according to claim 7, **characterised in that** at least one of the parts of the lower body of the fixed body is provided with an exterior mechanical sensor (8), located under the contact level of the drive means (10) with the flange (20) or the cover (21), said sensor being inside the hollow of the vessel, or on the exterior of the cover of the vessel (21), outside the movement surface, the sensor being formed by a support (81) arranged externally to the lower body of the fixed body (1), and transversally thereto, the support (81) being provided with an elongated or slotted hole (82), and **in that** said support (81) supports a vertical shaft wherein a freely rotating wheel is mounted with respect to said shaft, wherein the vertical shaft can be fixed in any position along said hole (82), said position determining the distance of the fixed body on the edge of the flange or the cover.

9. The device for cleaning the accommodating means of the bolts of the cover of the reactor vessel of a nuclear centre, according to any of claims 1 to 8, **characterised in that** it comprises regulator means of the position of the pins (13) with respect to the connection shaft of the fixed and mobile bodies, susceptible to fix the pin from a position closest to said shaft, corresponding to the accommodating means of bolts closest to each other, to a position further from said shaft.

10. The device for cleaning the accommodating means of the bolts of the cover of the reactor vessel of a nuclear centre, according to any of claims 1 to 9, **characterised in that** the lower support is provided with auxiliary devices, said auxiliary devices including one or more of the following:
• sensors for detecting the accommodating means;
• depth sensors for the accommodating means;
• limit switch for the axial movement of the brush;
• sensors for detecting guide bolts;
• lighting devices of the path of the device;
• lighting devices associated to at least one of the lateral pins;
• image viewing and/or recording cameras of the path of the device and/or the inside of the accommodating means of the bolts.

11. A method for cleaning the accommodating means of the bolts of the cover of the reactor vessel of a nuclear centre that uses the device of one of claims 1 to 10, **characterised in that** it comprises the operations of:
• Adjustment of the angular position of the parts constituting the lower body, in accordance with the geometric parameters of the vessel, or on a template of a portion of the flange or cover of the vessel; and consequently, the adjustment of the angular position of the parts constituting the upper body;
• Adjustment of the distance of the supports of the pins to the shaft of the brush, in accordance with the distance between the accommodating means of the bolts in the flange or in the cover of the vessel;
• Adjustment of the mechanical sensors that adjust the distance of the device to the inner edge of the vessel or outer edge of the cover, remaining in the inner area, with an angle less than 180°, when the accommodating means must be cleaned from the flange, and in the outer area in the area with an angle greater than 180° when the accommodating means must be cleaned from the cover;
• Placement of the device on the flange or on the cover of the vessel with the pins in a retracted or partially retracted position;
• Connection and activation of the suction means;
• Movement to the position of a first accommodating means to be cleaned, according to a signal provided by the position sensors;
• Folding of the pins or of the supports of the pins towards the cleaning position, in which said pins coincide with the accommodating means adjacent to that being cleaned;
• And in the cleaning position
o lowering of the upper support with respect to the lateral pillars, until the brush is located in the mouth of the accommodating means;
o support of the adjustment gasket in the mouth of the accommodating means of the bolt;
o rotation of the brush, and lowering of the same towards the inside of the accommodating means of the bolt, a distance determined by one or more of the following:
▪ a predetermined distance;
▪ a limit switch;
▪ until the bottom of the accommodating means is detected;
o suction of the dirt in the accommodating means;
• Lifting of the brush;
• Lifting of the upper support;
• Complete or partial folding and lifting of the pins or the supports of the pins; and
• Movement towards a new position, by activation of the motors that actuate the drive belts.

12. The method for cleaning the accommodating means of the bolts of the cover of the reactor vessel of a nuclear centre, according to claim 11, **characterised in that** it further comprises the complete lifting of the corresponding pin to a position wherein a guide bolt is located.

## Patentansprüche

1. Vorrichtung zur Reinigung der Aufnahmemittel von Bolzen der Abdeckung des Reaktorgefäßes eines nuklearen Zentrums, umfassend:
• Bürstenmittel des Aufnahmemittels von Bolzen, die sich entlang einer vertikalen Welle aufwärts und abwärts bewegen können;
• ein Saugmittel für den in dem Aufnahmemittel des Bolzens gelösten Rückstands;
• ein Paar Positionierungselemente in den Aufnahmemitteln benachbart des zu reinigenden;
wobei die Vorrichtung gebildet wird durch:
• einen feststehenden Körper (1); und
• einen mobilen Körper (2), der sich nach oben und unten entlang des feststehenden Körpers bewegen kann;
wobei der feststehende Körper gebildet wird durch:
• ein Paar lateraler Pfeiler (3), von denen sich einer auf jeder Seite des feststehenden Körpers (1) befindet;
• einen unteren Körper, der eine untere Gelenkstütze zwischen dem Paar lateraler Pfeiler bildet, wobei der untere Körper in zwei Teile geteilt ist, die durch ein zentrales verbundenes Gelenk (4) zusammengefügt werden;
• wobei das zentrale verbundene Gelenk ein ringförmiges Gelenk ist, wobei die Mitte hohl ist;
wobei der mobile Körper gebildet wird durch:
• einen oberen Körper, der eine obere Stütze bildet, welche das Bürstenmittel abstützt, das eine rotierende Reinigungsbürste (7) umfasst; wobei der Oberkörper in zwei Teile geteilt ist, die durch ein zentrales verbundenes Gelenk (5) zusammengefügt sind;
• wobei die Teile, welche die obere Stütze bilden, für eine Winkelpositionierung in Übereinstimmung mit der Winkelpositionierung der Teile, welche die untere Stütze bilden, empfänglich sind;
• wobei der mobile Körper die Bürstmittel des Aufnahmemittels des Bolzens abstützt;
wobei eine Verbindungswelle der zwei Teile, die den unteren Körper bilden, und eine Verbindungswelle der zwei Teile, die den oberen mobilen Körper bilden, koaxial verlaufen; und
wobei die Bürstmittel durch den Hohlraum des ringförmigen verbundenen Gelenks (4) des unteren Körpers verlaufen,
**dadurch gekennzeichnet, dass** jedes der Teile, die den unteren Körper des feststehenden Körpers bilden, extern zu der Seite gegenüber der Verbindungswelle eine Gabel (14) bilden, in der sich ein Positionierungsstift (13) befindet;
wobei der Positionierungsstift (13) integral in einer verbundenen Stütze (9) getragen wird, die es dem Stift (13) ermöglicht, mindestens eine Position einzunehmen, in der er sich in dem Aufnahmemittel benachbart der zu reinigenden und in einer angehobenen Position befindet;
und wobei die Gabel (14) mit einer Führung (42) oder Nocke versehen ist, die mindestens einen ersten vertikalen Abschnitt, mindestens einen zweiten schrägen oder gekrümmten Abschnitt und möglicherweise einen dritten vertikalen Abschnitt aufweist, und dadurch, dass der Stift (13) oder die Stütze (9) des Stifts Mitnehmer (43) umfasst, die auf der Führung (42) oder der Nocke gleiten können, und dadurch, dass die verbundene Stütze angehoben und abgesenkt werden kann, wobei das obere Ende des zweiten schrägen oder gekrümmten Abschnitts und der dritte vertikale Abschnitt eine dritte zurückgezogene Position des Stifts bestimmen, wobei das Zurückziehen des Stifts (13) durch Abwärtsklappen ausgeführt wird, wenn die Stütze (9) des Stifts angehoben wird, wobei die Klappposition des Stifts einen einzigen Freiheitsgrad aufweist, der durch die Hubposition der Verbindungswelle (44), die wiederum eine Position des Nockenmitnehmers (43) bestimmt, bestimmt wird.

2. Vorrichtung zur Reinigung der Aufnahmemittel von Bolzen der Abdeckung des Reaktorgefäßes eines nuklearen Zentrums nach Anspruch 1, **dadurch gekennzeichnet, dass** jede der lateralen Pfeiler durch ein Paar Säulen (31) gebildet wird, die am oberen Teil davon aneinandergefügt sind und auch mit dem unteren Körper zusammengefügt sind, wobei die Pfeiler (3) an ihrem oberen Teil durch eine zusätzliche obere Stütze zusammengefügt sind, wobei die zusätzliche obere Stütze auch in dem mittleren Teil davon verbunden ist.

3. Vorrichtung zur Reinigung der Aufnahmemittel von Bolzen der Abdeckung des Reaktorgefäßes eines nuklearen Zentrums nach einem der Ansprüche 1 bis 2, **dadurch gekennzeichnet, dass** jeder Pfeiler (3) eine Schnecke (32) integriert, die sich entlang der Hubs-/Absenkbewegung des mobilen Körpers in Bezug auf den feststehenden Körper erstreckt, der von einem Motor (33) betätigt wird und dessen Drehung elektronisch oder mechanisch mit der Drehung der Schnecke (32) des anderen Pfeilers (3) synchronisiert ist, und dadurch, dass die Teile, die den oberen Körper des mobilen Körpers bilden, mit den Schnecken mittels eines entsprechenden Gewindeaufnahmemittels zusammengefügt sind, so dass die Drehung der Schnecken (32) die Hub-/Absenkbewegung des mobilen Körpers in Bezug auf den feststehenden Körper bestimmt.

4. Vorrichtung zur Reinigung der Aufnahmemittel von Bolzen der Abdeckung des Reaktorgefäßes eines nuklearen Zentrums nach einem der Ansprüche 1 bis 3, **dadurch gekennzeichnet, dass** der untere Körper des feststehenden Körpers (1) und der obere Körper des mobilen Körpers(2) zwischen einem Winkel von 180° verbunden sind, wobei die verbundenen Teile in einer geradlinigen Position angeordnet sind, und einem Winkel von 90° zu beiden Seiten, wobei die zwei verbundenen Teile, die den unteren Körper des feststehenden Körpers (1) bilden, in jeder Winkelposition befestigt werden können, und die verbundenen Teile, die den oberen Körper des mobilen Körpers bilden, ebenfalls in einer Winkelposition in Übereinstimmung mit der Winkelposition des unteren Körpers befestigt werden können.

5. Vorrichtung zur Reinigung der Aufnahmemittel von Bolzen der Abdeckung des Reaktorgefäßes eines nuklearen Zentrums nach einem der Ansprüche 1 bis 4, **dadurch gekennzeichnet, dass** ein Antriebsmotor (53) der Reinigungsbürste (7) an dem mobilen Teil eines ausfahrbaren Körpers (51, 52) durch pneumatische, hydraulische oder mechanische Mittel abgestützt ist, wobei der feststehende Teil (51) des ausfahrbaren Körpers direkt oder indirekt mit dem oberen Körper des mobilen Körpers (2) zusammengefügt ist.

6. Vorrichtung zur Reinigung der Aufnahmemittel von Bolzen der Abdeckung des Reaktorgefäßes eines nuklearen Zentrums nach Anspruch 5, **dadurch gekennzeichnet, dass** die Welle der Bürste (7) mit einer ersten Abdeckung (72) versehen ist, die eine Drehwelle (71) der Bürste, des Motors (53) und des ausfahrbaren Körpers (51, 52) schützt, die auch eine untere Dichtung aufweist, durch welche die Drehwelle (71) der Bürste durchgeht; wobei die erste Abdeckung der Welle (72) der Bürste mit einer zweiten Abdeckung (73) versehen ist, die einen Saugkanal bildet; wobei die erste Abdeckung (72) der Welle der Bürste und die zweite Abdeckung (73) Ausfahrmittel umfassen.

7. Vorrichtung zur Reinigung der Aufnahmemittel von Bolzen der Abdeckung des Reaktorgefäßes eines nuklearen Zentrums nach einem der Ansprüche 1 bis 6, **dadurch gekennzeichnet, dass** diese eine Baugruppe von Antriebsmitteln umfasst, um sich entlang eines Flansches oder einer entsprechenden Flanschabdeckung zu bewegen, wobei die Antriebsmittel aus einer rollenden Baugruppe bestehen, die ein Zugelement bildet, das auf jeder Seite jedes verbundenen Teils des unteren Körpers des feststehenden Körpers (1) angeordnet ist, wobei jedes Zugelement durch zwei oder mehr Räder (11) gebildet wird, von denen mindestens eines mit einem Motor (15) verbunden ist, wobei die Räder (11) mit einer Antriebskette oder einem Antriebsriemen (12) versehen sind.

8. Vorrichtung zur Reinigung der Aufnahmemittel von Bolzen der Abdeckung des Reaktorgefäßes eines nuklearen Zentrums nach Anspruch 7, **dadurch gekennzeichnet, dass** mindestens einer der Teile des unteren Körpers des feststehenden Körpers mit einem äußeren mechanischen Sensor (8) versehen ist, der sich unter der Kontaktebene des Antriebsmittels (10) mit dem Flansch (20) oder der Abdeckung (21) befindet, wobei sich der Sensor innerhalb des Hohlraums des Behälters oder an der Außenseite der Abdeckung des Gefäßes (21) außerhalb der Bewegungsoberfläche befindet, wobei der Sensor durch eine Stütze (81) gebildet wird, die außerhalb des unteren Körpers des feststehenden Körpers (1) und quer dazu angeordnet ist, wobei die Stütze (81) mit einem Langloch oder Schlitzloch (82) versehen ist, und dadurch, dass die Stütze (81) eine vertikale Welle abstützt, wobei ein frei drehbares Rad in Bezug auf die Welle montiert ist, wobei die vertikale Welle in jeder Position entlang des Lochs (82) befestigt werden kann, wobei die Position den Abstand des befestigten Körpers vom Rand des Flansches oder der Abdeckung bestimmt.

9. Vorrichtung zur Reinigung der Aufnahmemittel von Bolzen der Abdeckung des Reaktorgefäßes eines nuklearen Zentrums nach einem der Ansprüche 1 bis 8, **dadurch gekennzeichnet, dass** diese Mittel zum Regulieren der Position der Stifte (13) in Bezug auf die Verbindungswelle des feststehenden und des mobilen Körpers umfasst, die den Stift von einer Position, die der Welle am nächsten liegt, entsprechend den Aufnahmemitteln von Bolzen, die am nächsten beieinander liegen, an einer weiter von der Welle entfernten Position befestigen können.

10. Vorrichtung zur Reinigung der Aufnahmemittel von Bolzen der Abdeckung des Reaktorgefäßes eines nuklearen Zentrums nach einem der Ansprüche 1 bis 9, **dadurch gekennzeichnet, dass** die untere Stütze mit Hilfsvorrichtungen versehen ist, wobei die Hilfsvorrichtungen eines oder mehrere von Folgendem einschließen:
• Sensoren zum Erfassen der Aufnahmemittel;
• Tiefensensoren für die Aufnahmemittel;
• Grenzschalter für die Axialbewegung der Bürste;
• Sensoren zum Erfassen der Führungsbolzen;
• Beleuchtungsvorrichtungen des Wegs der Vorrichtung;
• Beleuchtungsvorrichtungen, die mindestens einem der lateralen Stifte zugeordnet sind;
• Bildansicht- und/oder -aufzeichnungskameras des Wegs der Vorrichtung und/oder der Innenseite der Aufnahmemittel der Bolzen.

11. Verfahren zur Reinigung der Aufnahmemittel von Bolzen der Abdeckung des Reaktorgefäßes eines nuklearen Zentrums, das die Vorrichtung nach einem der Ansprüche 1 bis 10 verwendet, **dadurch gekennzeichnet, dass** es die folgenden Vorgänge umfasst:
• Einstellung der Winkelposition der Teile, die den unteren Körper bilden, in Übereinstimmung mit den geometrischen Parametern des Gefäßes oder auf einer Matrize eines Abschnitts des Flansches oder der Abdeckung des Gefäßes; und dementsprechend Einstellung der Winkelposition der Teile, die den oberen Körper bilden;
• Einstellung des Abstands der Stützen der Stifte zur Welle der Bürste entsprechend dem Abstand zwischen den Aufnahmemitteln der Bolzen im Flansch oder in der Abdeckung des Gefäßes;
• Einstellung der mechanischen Sensoren, die den Abstand der Vorrichtung zum Innenrand des Gefäßes oder Außenrand der Abdeckung, aber im Innenbereich verbleibend, mit einem Winkel von kleiner als 180° einstellen, wenn das Aufnahmemittel von dem Flansch gereinigt werden muss, und im Außenbereich im Bereich mit einem Winkel von größer als 180°, wenn das Aufnahmemittel von der Abdeckung gereinigt werden muss;
• Platzierung der Vorrichtung auf dem Flansch oder auf der Abdeckung des Gefäßes mit eingezogenen oder teilweise eingezogenen Stiften;
• Verbindung und Aktivierung des Saugmittels;
• Bewegung der Position eines ersten zu reinigenden Aufnahmemittels gemäß einem von den Positionssensoren bereitgestellten Signal;
• Klappen der Stifte oder der Stützen der Stifte in Richtung der Reinigungsposition, in der die Stifte mit den Aufnahmemitteln benachbart des zu reinigenden übereinstimmen;
• und in der Reinigungsposition
∘ Absenken der oberen Stütze in Bezug auf die seitlichen Pfeiler, bis sich die Bürste in der Mündung des Aufnahmemittels befindet;
∘ Abstützen der Einstelldichtung in der Mündung des Aufnahmemittels des Bolzens;
∘ Drehen der Bürste und Absenken derselben in Richtung der Innenseite des Aufnahmemittels des Bolzens um einen Abstand, der durch eines oder mehrere von Folgendem bestimmt wird:
▪ einem vorbestimmten Abstand;
▪ einem Grenzschalter;
▪ bis der Knopf des Aufnahmemittels erfasst wird;
o Ansaugen von Schmutz in das Aufnahmemittel;
• Anheben der Bürste;
• Anheben der oberen Stütze;
• Vollständiges oder teilweise Klappen und Anheben der Stifte oder der Stützen der Stifte; und
• Bewegung in Richtung einer neuen Position, durch Aktivierung der Motoren, welche die Antriebsriemen betätigen.

12. Verfahren zur Reinigung der Aufnahmemittel von Bolzen der Abdeckung des Reaktorgefäßes eines nuklearen Zentrums nach Anspruch 11, **dadurch gekennzeichnet, dass** es ferner das vollständige Anheben des entsprechenden Stifts in eine Position umfasst, in der sich ein Führungsbolzen befindet.

## Revendications

1. Dispositif de nettoyage des moyens de logement des boulons du **couvercle de la cuve de réacteur d'un centre nucléaire,** comprenant :
• Des moyens de brossage du moyen de logement du boulon, qui peuvent se déplacer vers le haut et vers **le bas le long d'un arbre** vertical ;
• un **moyen d'aspiration des résidus délogés dans le moyen de** logement du boulon ;
• **une paire d'éléments de positionnement dans le moyen de logement** adjacent à celui étant nettoyé ;
dans lequel le dispositif est formé par :
• un corps fixe (1) ; et
• un corps mobile (2) qui peut se déplacer vers le haut et vers le bas le long du corps fixe ;
dans lequel le corps fixe est formé par :
• une paire de piliers latéraux (3), un situé de chaque côté dudit corps fixe (1);
• un corps inférieur qui forme un support de joint inférieur entre la paire de piliers latéraux, ledit corps inférieur étant divisé en deux parties **jointes l'une à l'autre au moyen d'un joint connecté central** (4) **;**
• dans lequel le joint connecté central est un joint annulaire dans lequel le centre est creux ;
dans lequel le corps mobile est formé par :
• un corps supérieur qui constitue un support supérieur qui supporte les moyens de brossage comprenant une brosse de nettoyage rotative (7) ; ledit corps supérieur étant divisé en deux parties jointes **l'une à l'autre au moyen d'un joint connecté central** (5) **;**
• dans lequel les parties qui constituent le support supérieur sont sensibles au positionnement angulaire selon le positionnement angulaire des parties constituant le support inférieur ;
• dans lequel le corps mobile supporte les moyens de brossage du moyen de logement du boulon ;
dans lequel un arbre de connexion des deux parties qui forment le corps inférieur et un arbre de connexion des deux parties qui forment le corps mobile supérieur sont coaxiaux ; et
dans lequel les moyens de brossage circulent à travers le creux du joint connecté annulaire (4) du corps inférieur,
**caractérisé en ce que** chacune des parties qui constitue le corps inférieur du corps fixe de **manière externe forme, vers le côté opposé à celui de l'arbre de** connexion, une fourche (14) dans laquelle une goupille de positionnement (13) est située ;
dans lequel la goupille de positionnement (13) est supportée de manière intégrale dans un support connecté (9) qui permet à ladite goupille **(13) d'adopter au moins** une position où elle est située dans le moyen de logement adjacent à celui étant nettoyé, et dans une position levée ;
et dans lequel la fourche **(14) est pourvue d'un guide (42) ou d'une came** qui a au moins une première portion verticale, au moins une deuxième portion oblique ou incurvée, et éventuellement une troisième portion verticale, et **en ce que** la goupille (13) ou le support (9) de la goupille comprend des suiveurs (43) sensibles au coulissement sur le guide (42) ou la came, et **en ce que** le support **connecté est sensible au levage et à l'abaissement, dans lequel l'extrémité** supérieure de la deuxième portion oblique ou incurvée et la troisième portion verticale détermine une troisième position rétractée de la goupille, la rétraction de la goupille (13) étant réalisée par un repli vers le bas lorsque le support (9) de ladite goupille est levé, la position de repli de la goupille ayant un seul degré de liberté, déterminé par la position de **levage de l'arbre de connexion** (44), qui à son tour détermine une position du suiveur de came (43).

2. Dispositif de nettoyage des moyens de logement des boulons du **couvercle de la cuve de réacteur d'un centre nucléaire, selon la revendication 1, caractérisé en ce que** chacun des piliers latéraux est formé par une paire de colonnes **(31) jointes l'une à l'autre au niveau de la partie supérieure de celles-ci** et également jointes au corps inférieur les piliers (3) étant joints au niveau de la partie supérieure de celles-ci par un support supérieur supplémentaire, ledit support supérieur supplémentaire étant également connecté dans la partie centrale de celles-ci.

3. Dispositif de nettoyage des moyens de logement des boulons du **couvercle de la cuve de réacteur d'un centre nucléaire, selon les** revendications 1 à 2, **caractérisé en ce que** chaque pilier (3) intègre une vis sans fin **(32), qui s'étend le long du chemin de le**vage/abaissement du corps mobile par rapport au corps fixe, qui est actionnée par un moteur (33) et dont la rotation est synchronisée de manière électronique ou mécanique avec la rotation de la vis sans fin **(32) de l'autre pilier** (3), et **en ce que** les parties qui forment le corps **supérieur du corps mobile sont jointes auxdites vis sans fin au moyen d'un moyen** de logement fileté correspondant, de telle sorte que la rotation desdites vis sans fin (32) détermine le mouvement de levage/abaissement dudit corps mobile par rapport audit corps fixe.

4. Dispositif de nettoyage des moyens de logement des boulons du **couvercle de la cuve de réacteur d'un centre nucléaire, selon l'une quelconque** des revendications 1 à 3, **caractérisé en ce que** le corps inférieur du corps fixe (1) et le corps supérieur du corps mobile (2) sont connectés entre un angle de 180°, dans lequel les parties connectées sont agencées dans une position rectiligne, **et un angle de 90° vers l'un ou l'autre côté, étant les deux parties connectées qui** forment le corps inférieur du corps fixe (1) **sensibles au fait d'être fixées dans** une quelconque position angulaire et les parties connectées qui forment le corps **supérieur du corps mobile sont de la même manière sensibles au fait d'être fixées** dans une position angulaire selon la position angulaire du corps inférieur.

5. Dispositif de nettoyage des moyens de logement des boulons du **couvercle de la cuve de réacteur d'un centre nucléaire, selon l'une quelconque** des revendications 1 à **4, caractérisé en ce qu'un moteur d'entraînement** (53) de la brosse de nettoyage (7) **est supporté sur la partie mobile d'un corps** extensible (51, 52) par des moyens pneumatiques, hydrauliques ou mécaniques, la partie fixe (51) dudit corps extensible étant directement ou indirectement joint au corps supérieur du corps mobile (2).

6. Dispositif de nettoyage des moyens de logement des boulons du **couvercle de la cuve de réacteur d'un centre nucléaire, selon la revendication** 5, **caractérisé en ce que l'arbre de la brosse** (7) est pourvu d'une première enveloppe (72) qui protège un arbre de rotation (71) de ladite brosse, le moteur (53) et le corps extensible (51, 52), ayant également une garniture **d'étanchéité inférieure à travers laquelle l'arbre de rotation** (71) de la brosse passe ; la **première enveloppe de l'arbre (72) de la brosse est pourvue d'une** deuxième enveloppe (73) **qui constitue un canal d'aspiration ; la première** enveloppe **(72) de l'arbre de la brosse et la deuxième enveloppe** (73) comprenant **des moyens d'extension.**

7. Dispositif de nettoyage des moyens de logement des boulons du **couvercle de la cuve de réacteur d'un centre nucléaire, selon l'une quelconque** des revendications 1 à 6, **caractérisé en ce qu'il comprend un ensemble de moyen d'entraînement pour se déplacer le long d'une bride ou d'un couvercle de bride correspondant, le moyen d'entraînement étant constitué d'un ensemble** roulant formant un élément de traction agencé sur chaque côté de chaque partie connectée du corps inférieur du corps fixe (1), chaque élément de traction étant formé par deux ou plusieurs roues **(11), dont au moins l'une est connectée à un** moteur (15), lesdites roues **(11) étant pourvues d'une chaîne ou d'une courroie d'entraînement** (12).

8. Dispositif de nettoyage des moyens de logement des boulons du couvercle de la cuve de réacteur d'un centre nucléaire, selon la revendication 7, **caractérisé en ce qu'**au moins l'une des parties du corps inférieur du corps fixe est pourvue d'un capteur mécanique extérieur (8), situé sous le niveau de contact du moyen d'entraînement (10) avec la bride (20) ou le couvercle (21), ledit capteur étant à l'intérieur du creux de la cuve, ou sur l'extérieur du couvercle de la cuve (21), en dehors de la surface de mouvement, le capteur étant formé par un support (81) agencé de manière externe au corps inférieur du corps fixe (1), et de manière transversale sur celui-ci, le support (81) étant pourvu d'un trou allongé ou oblong (82), et **en ce que** ledit support (81) supporte un arbre vertical dans lequel une roue à rotation libre est montée par rapport audit arbre, dans lequel l'arbre vertical peut être fixé dans une quelconque position le long dudit trou (82), ladite position déterminant la distance du corps fixe sur le bord de la bride ou du couvercle.

9. Dispositif de nettoyage des moyens de logement des boulons du couvercle de la cuve de réacteur d'un centre nucléaire, selon l'une quelconque des revendications 1 à 8, **caractérisé en ce qu'**il comprend des moyens de régulation de la position des goupilles (13) par rapport à l'arbre de connexion des corps fixe et mobile, sensibles pour fixer la goupille à partir d'une position la plus proche dudit arbre, correspondant aux moyens de logement de boulons les plus proches les uns des autres, vers une position plus éloignée dudit arbre.

10. Dispositif de nettoyage des moyens de logement des boulons du couvercle de la cuve de réacteur d'un centre nucléaire, selon l'une quelconque des revendications 1 à 9, **caractérisé en ce que** le support inférieur est pourvu de dispositifs auxiliaires, lesdits dispositifs auxiliaires incluant l'un ou plusieurs des éléments suivants :
• capteurs pour la détection des moyens de logement ;
• capteurs de profondeur pour les moyens de logement ;
• interrupteur de fin de course pour le mouvement axial de la brosse ;
• capteurs pour la détection de boulons de guidage ;
• dispositifs d'éclairage du chemin du dispositif ;
• dispositifs d'éclairage associés à au moins l'une des goupilles latérales ;
• **caméras de visualisation et/ou enregistrement d'image du chemin du dispositif et/ou de l'intérieur des moyens de logement des boulons.**

11. Procédé de nettoyage des moyens de logement des boulons du couvercle **de la cuve de réacteur d'un centre nucléaire qui utilise le dispositif de l'une des** revendications 1 à 10, **caractérisé en ce qu'**il comprend les opérations consistant à :
• Ajuster la position angulaire des parties constituant le corps inférieur, selon les paramètres géométriques de la cuve, ou sur un modèle d'une portion de la bride ou du couvercle de la cuve ; et par conséquent, ajuster la position angulaire des parties constituant le corps supérieur ;
• Ajuster la distance des supports des goupilles à l'arbre de la brosse, selon la distance entre les moyens de logement des boulons dans la bride ou dans le couvercle de la cuve ;
• Ajuster les capteurs mécaniques qui ajustent la distance du dispositif au bord interne de la cuve ou au bord externe du couvercle, restant dans la zone interne, avec un angle de moins de 180°, lorsque les moyens de logement doivent être nettoyés à partir de la bride, et dans la zone externe dans la zone avec un angle supérieur à 180° lorsque les moyens de logement doivent être nettoyés à partir du couvercle ;
• Placer le dispositif sur la bride ou sur le couvercle de la cuve avec les goupilles dans une position rétractée ou partiellement rétractée ;
• Connecter et activer le moyen d'aspiration ;
• Engendrer un mouvement vers la position d'un premier moyen de logement à nettoyer, selon un signal pourvu par les capteurs de position ;
• Replier les goupilles ou les supports des goupilles en direction de la position de nettoyage, dans laquelle lesdites goupilles coïncident avec le moyen de logement adjacent à celui étant nettoyé ;
• Et dans la position de nettoyage
∘ abaisser le support supérieur par rapport aux piliers latéraux, jusqu'à ce que la brosse soit située dans la bouche du moyen de logement ;
∘ supporter la garniture d'ajustement dans la bouche du moyen de logement du boulon ;
∘ mettre en rotation la brosse, et abaisser la même en direction de l'intérieur du moyen de logement du boulon, sur une distance déterminée par l'un ou plusieurs des éléments suivants :
▪ une distance prédéterminée ;
▪ un interrupteur de fin de course ;
**▪ jusqu'à ce que le fond du moyen de logement soit détecté ;**
∘ aspirer la saleté dans le moyen de logement ;
• Lever la brosse ;
• Lever le support supérieur ;
• Replier et lever complètement ou partiellement les goupilles ou les supports des goupilles ; et
• **Engendrer un mouvement en direction d'une nouvelle position, par activation des moteurs qui actionnent les courroies d'entraînement.**

12. Procédé de nettoyage des moyens de logement des boulons du couvercle **de la cuve de réacteur d'un centre nucléaire, selon la revendication 11, caractérisé en ce qu'**il comprend en outre le levage complet de la goupille correspondante vers une position dans laquelle un boulon de guidage est situé.
